# EUROPEAN PATENT APPLICATION

(11) **EP 4 843 840 A1**
(43) Date of publication of application: **25.11.2026**
(21) Application number: 26178718.8
(22) Date of filing: 13.05.2026
(51) Int. Cl.: B60R 21/13

(54) **WORK VEHICLE**

(30) Priority: 22.05.2025 JP 2025085545
(71) Applicant: Kubota Corporation, Osaka-shi, Osaka 530-0011 (JP)
(72) Inventor: TERAOKA, Tasuku, Sakai-shi, Osaka 5900908 (JP); NISHIDA, Hirohito, Sakai-shi, Osaka 5900908 (JP)
(74) Representative: Cabinet Beau de Loménie

(57) **Abstract**

A work vehicle includes: a body; an attachment section (30) coupled to the body; a roll-over protective structure frame (20) with a leg (21); an exposed portion (36) in the attachment section (30), the exposed portion (36) facing rearward or forward and allowing the leg (21) to enter and exit the attachment section (30) as a result of being moved forward or rearward; and at least one coupler (39, 40) configured to couple the leg (21) in the attachment section (30) to the attachment section (30).

## Description

### BACKGROUND OF THE INVENTION

### Field of the Invention

The present invention relates to a work vehicle including a roll-over protective structure (ROPS) frame.

### Description of the Related Art

JP2017-109567A discloses, for example, an operation for attaching a ROPS frame to the vehicle body, which operation includes lowering the ROPS frame from above the body with use of a crane or the like and inserting the legs through the respective exposed portions into the respective attachment sections to couple the legs to the respective attachment sections. The document discloses a reverse procedure for detachment of the ROPS frame from the body, which procedure includes lifting the ROPS frame with use of a crane or the like to pull the legs upward out of the respective attachment sections through the respective exposed portions. This structure involves lowering and lifting the ROPS frame for its attachment to and detachment from the body. This requires a work space relatively large in a vertical direction. However, in a work space with a limited height such as in a warehouse, it will be difficult to lower and lift the ROPS frame for its attachment to and detachment from the body. The present invention is intended to provide a work vehicle including a ROPS frame easily attachable to and detachable from the body of the work vehicle.

### SUMMARY OF THE INVENTION

A work vehicle according to the present invention includes:
a body;
an attachment section coupled to the body;
a roll-over protective structure frame with a leg;
an exposed portion in the attachment section, the exposed portion facing rearward or forward and allowing the leg to enter and exit the attachment section as a result of being moved forward or rearward; and
at least one coupler configured to couple the leg in the attachment section to the attachment section.

The above configuration allows a worker to attach the ROPS frame to the body by simply moving the ROPS frame forward (or rearward) relative to the body to bring the ROPS frame close to the body. The work vehicle includes an exposed portion in the attachment section which exposed portion faces rearward (or forward). This allows the worker to move the ROPS frame forward (or rearward) relative to the body to insert the leg through the exposed portion into the attachment section. The worker uses the coupler to couple the leg to the attachment section. The above configuration allows the worker to detach the ROPS frame from the body through a procedure reverse to the attachment, which procedure includes removing the coupler and moving the ROPS frame rearward (or forward) away from the body to pull the leg out of the attachment section through the exposed portion. The above configuration allows a worker to move the ROPS frame forward (or rearward) relative to the body to bring the ROPS frame close to the body (or move the ROPS frame away from the body). Even in a work space with a limited height such as in a warehouse, the above configuration allows the worker to easily attach and detach the ROPS frame to and from the body. This improves the workability of the attachment and detachment.

The work vehicle may, as an embodiment of the present invention, further include:
a positioner configured to place the leg in the attachment section at a position along a vertical axis.

With the above configuration, the positioner places the leg in the attachment section at a position along the vertical axis. This allows the worker to easily couple the leg to the attachment section with use of a coupler, thereby improving the workability of attaching the ROPS frame to the body.

The work vehicle may, as an embodiment of the present invention, be further configured such that
the at least one coupler includes a first bolt configured to be inserted through the leg and the attachment section along a front-rear axis and be fastened.

The above configuration allows the worker to move the ROPS frame forward (or rearward) relative to the body to insert the leg into the attachment section and then insert a first bolt through the leg and the attachment section along the front-rear axis (in which the worker moved the ROPS frame) and fasten the first bolt. This improves the workability of attaching the ROPS frame to the body.

The work vehicle may, as an embodiment of the present invention, further include:
a positioner provided for the leg and configured to come into contact with the attachment section to place the leg in the attachment section (30) at a position along a vertical axis,
wherein the at least one coupler includes a second bolt configured to be inserted through the positioner and the attachment section along the vertical axis and be fastened.

With the above configuration, the positioner places the leg in the attachment section at a position along the vertical axis. This allows the worker to easily insert the first bolt through the leg and the attachment section along the front-rear axis and fasten the first bolt, thereby improving the workability of attaching the ROPS frame to the body. The above configuration allows the worker to insert a second bolt through the positioner and the attachment section along the vertical axis and fasten the second bolt. This allows the leg to be coupled to the attachment section with increased strength as a result of fastening a first bolt extending along the front-rear axis and a second bolt extending along the vertical axis.

The work vehicle may, as an embodiment of the present invention, be further configured such that
the leg is in a form of a square pipe including: a front face section oriented along a lateral axis; a rear face section rearward of the front face section and oriented along the lateral axis; an inner face section oriented along the front-rear axis; and an outer face section laterally outward of the inner face section relative to the body and oriented along the front-rear axis,
the front face section and the rear face section each have a lateral dimension, whereas the inner face section and the outer face section each have a front-rear dimension, the lateral dimension being smaller than the front-rear dimension, and
the first bolt is configured to be inserted through the front face section, the rear face section, and the attachment section along the front-rear axis and be fastened.

With the above configuration, the leg is in the form of a square pipe including front and rear face sections oriented along the lateral axis and inner and outer face sections oriented along the front-rear axis. The front and rear face sections each have a lateral dimension, whereas the inner and outer face sections each have a front-rear dimension, the lateral dimension being smaller than the front-rear dimension. This allows the first bolt, which has a predetermined length, to be inserted through the front and rear face sections and the attachment section along the front-rear axis, that is, along the inner and outer face sections, and fastened.

The work vehicle may, as an embodiment of the present invention, be further configured such that
the attachment section includes: a first portion oriented along a lateral axis and a vertical axis; a second portion extending rearward or forward from a lateral portion of the first portion and oriented along a front-rear axis and the vertical axis; a third portion extending rearward or forward from an upper portion of the first portion and oriented along the front-rear axis and the lateral axis; a fourth portion extending rearward or forward from a lower portion of the first portion and oriented along the front-rear axis and the lateral axis; and an exposed upper portion in the third portion,
the exposed portion is defined by respective ends of the second portion, the third portion, and the fourth portion along the front-rear axis, and
the leg in the attachment section extends upward through the exposed upper portion.

With the above configuration, the attachment section is in the form of a box including first to fourth portions. The exposed portion is defined by respective ends of the first to fourth portions along the front-rear axis. The attachment section is sufficiently strong despite its exposed portion. The work vehicle includes an exposed upper portion in the third portion. The leg in the attachment section extends upward through the exposed upper portion. Even if the attachment section is box-shaped as above, the above configuration allows the leg to be inserted easily into the attachment section and contained therein.

The above-mentioned and other embodiments, procedures, features, and effects of the present disclosure will be more apparent from the following detailed description of the embodiments with reference to the drawings.

### BRIEF DESCRIPTION OF THE DRAWINGS

Embodiments of the present invention will be described with reference to the following drawings:
Fig. 1 is a left side view of a tractor;
Fig. 2 is a left side view of a rear portion of a body frame member, a transmission case, a lower portion of a ROPS frame, and a support frame member as well as their surroundings;
Fig. 3 is a rear view of a rear portion of a body frame member, a transmission case, a lower portion of a ROPS frame, and a support frame member as well as their surroundings;
Fig. 4 is a rear view of a left leg of a ROPS frame and a left attachment section as well as their surroundings;
Fig. 5 is a cross-sectional view taken along line V-V in Fig. 4; and
Fig. 6 is a cross-sectional plan view of a left leg of a ROPS frame and a left attachment section as well as their surroundings.

### DETAILED DESCRIPTION OF THE PREFERRED EMBODIMENTS

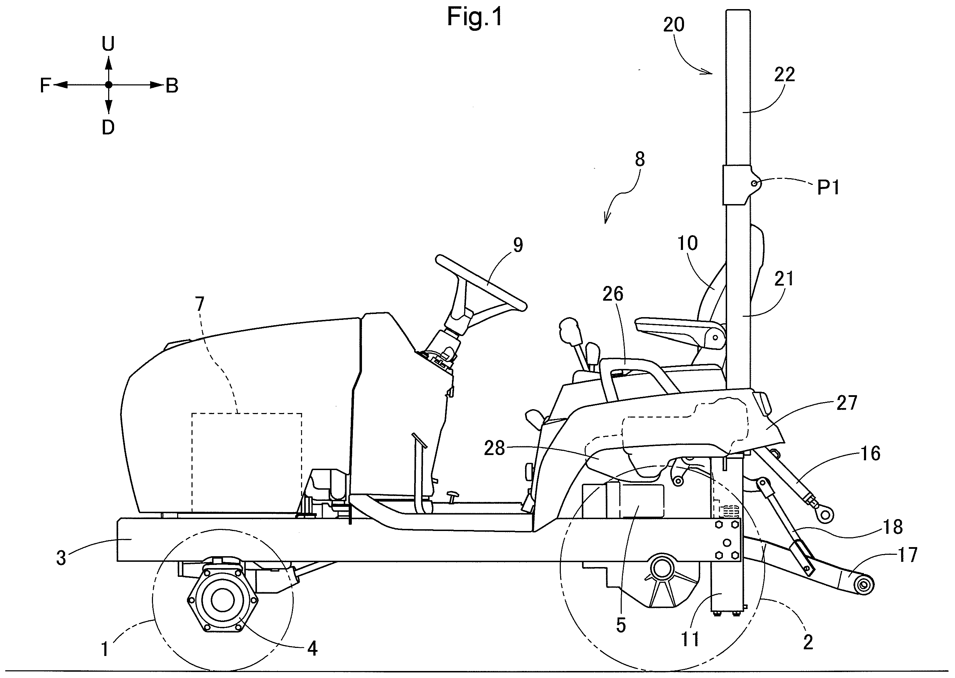

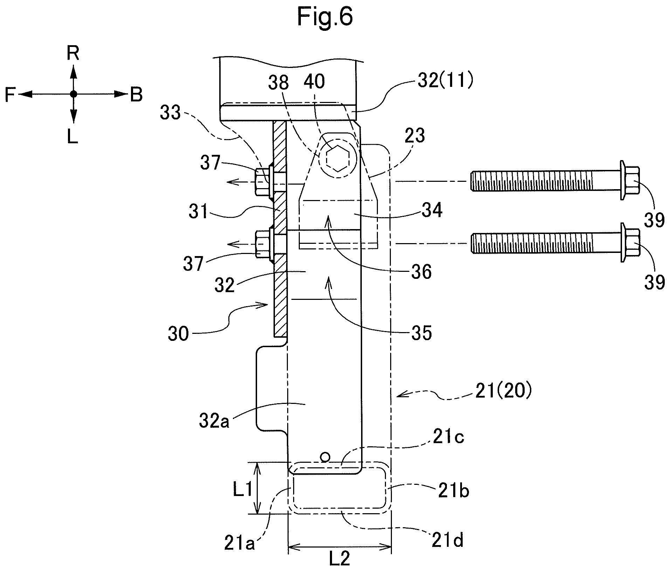

Figs. 1 to 6 illustrate a tractor as an example work vehicle. The drawings show "F" to indicate the forward direction, "B" to indicate the rearward direction, "U" to indicate the upward direction, "D" to indicate the downward direction, "L" to indicate the leftward direction, and "R" to indicate the rightward direction.

### Overall Configuration of Tractor

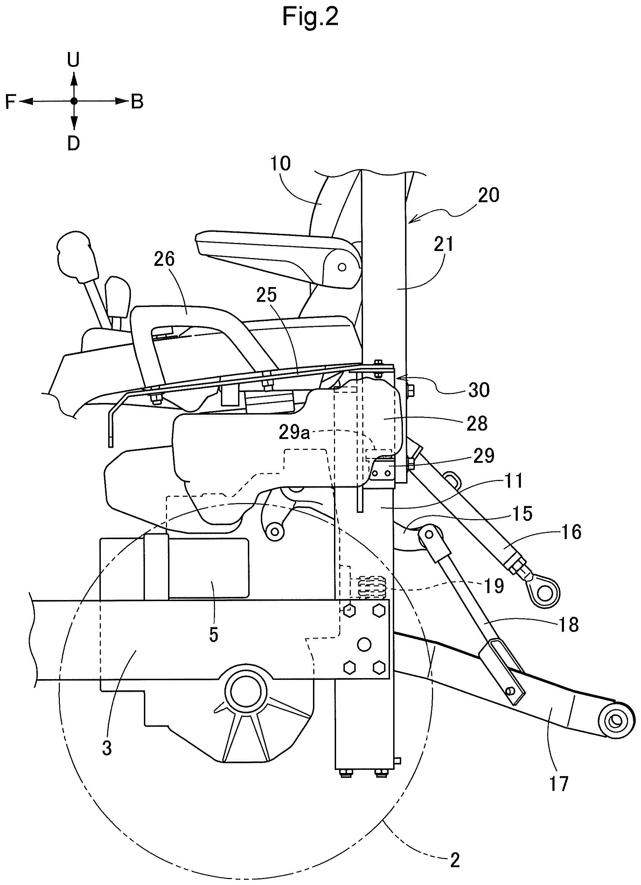

As illustrated in Figs. 1 and 2, the tractor includes a pair of left and right body frame members 3 each extending along the front-rear axis, a front axle case 4 at respective front portions of the body frame members 3, a pair of right and left front wheels 1 on the front axle case 4, a transaxle 5 coupled to respective rear portions of the body frame members 3, and a pair of left and right rear wheels 2 on the transaxle 5.

The tractor includes an engine 7 at respective front portions of the body frame members 3, a driver section 8 at respective rear portions of the body frame members 3, a steering wheel 9 disposed in the driver section 8 for use to turn the front wheels 1, a driver's seat 10 in the driver section 8, and a roll-over protective structure (ROPS) frame 20 disposed rearward of the driver's seat 10 and extending upward.

### Around Rear Portions of Body Frame Members 3

As illustrated in Figs. 1, 2, and 3, the tractor includes a pair of left and right support frame members 11 each in the form of a flat plate and coupled vertically to respective rear portions of the body frame members 3.

The tractor includes a support frame member 12 coupled to the transaxle 5 and respective upper portions of the support frame members 11. The support frame member 12 includes a body 12a in the form of a round bar and brackets 12b and 12c coupled to the body 12a. The body 12a is coupled to respective upper portions of the support frame members 11. The bracket 12b is coupled to an upper portion of the transaxle 5. The tractor includes a support frame member 13 in the form of a flat plate and a pivot shaft 14 coupled to respective lower portions of the support frame members 11.

The tractor includes a pair of left and right lift arms 15 disposed at an upper portion of the transaxle 5 and extending rearward through a space between the support frame members 11, a top link 16 attached to the brackets 12c in such a manner as to be swingable upward and downward and extending rearward, a pair of left and right lower links 17 attached to the pivot shaft 14 in such a manner as to be swingable upward and downward and extending rearward, and a pair of left and right rods 18 connected to the respective lift arms 15 and the respective lower links 17.

The tractor is provided with an implement such as a rotary tiller device (not illustrated in the drawings) attached to the top link 16 and the lower links 17. Swinging the lift arms 15 upward and downward lifts and lowers the top link 16 and the lower links 17, which in turn lifts and lowers the implement. The tractor includes a power take-off (PTO) shaft 19 at a rear portion of the transaxle 5 and a power transmission shaft (not illustrated in the drawings) connected to the PTO shaft 19 and the implement to transmit motive power from the PTO shaft 19 to the implement and drive the implement.

### Overall Configuration of ROPS Frame 20

As illustrated in Figs. 1, 2, and 3, the ROPS frame 20 is coupled to respective upper portions of the support frame members 11. The ROPS frame 20 is coupled to respective rear portions of the body frame members 3 and a rear portion of the transaxle 5 through the support frame members 11 and 12.

The ROPS frame 20 includes a pair of left and right legs 21 each in the form of a square pipe. The legs 21 are coupled to respective upper portions of the support frame members 11 (described later) and extend upward.

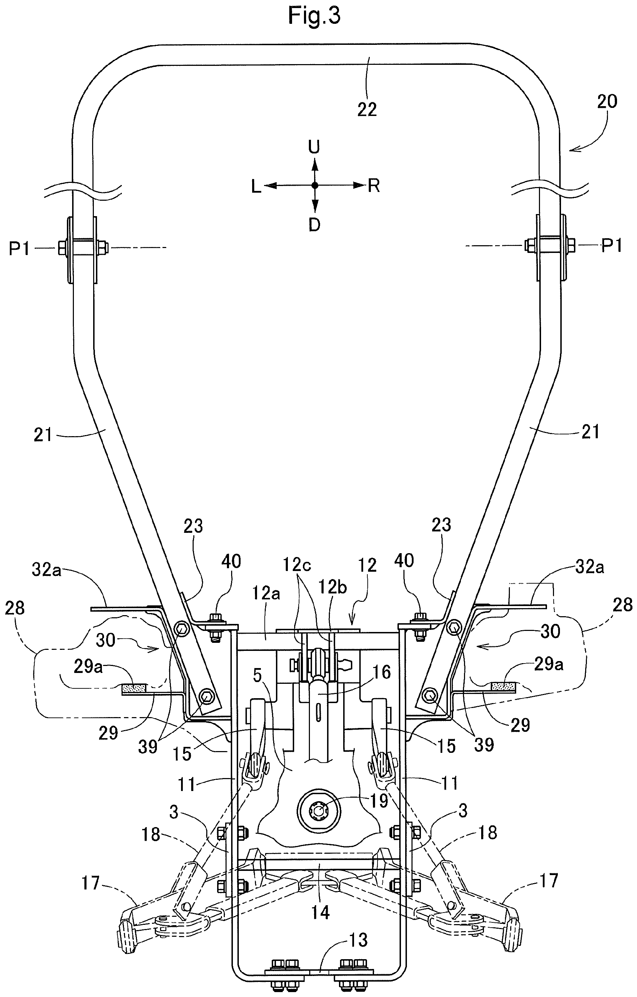

The ROPS frame 20 includes an upper section 22 in the form of a square pipe with an arch shape in a front view. The upper section 22 has a pair of left and right lower portions attached to respective upper portions of the legs 21 in such a manner as to be swingable about a lateral axis P1 into a work orientation illustrated in Figs. 1 and 3 and a storage orientation, in which the upper section 22 is inclined rearward relative to the legs 21.

### Legs 21 of ROPS Frame 20

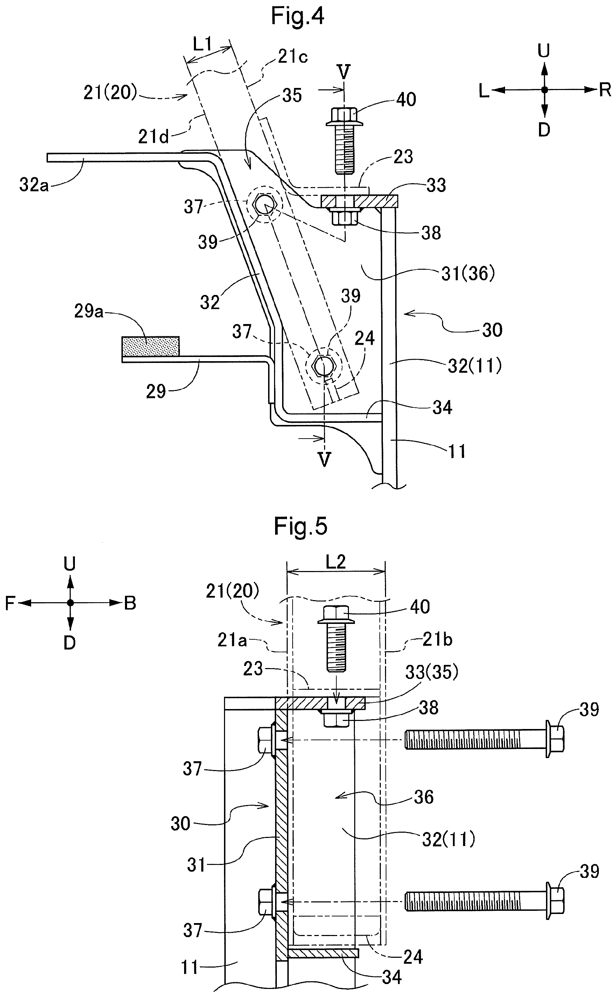

As illustrated in Figs. 4, 5, and 6, the legs 21 each include a front face section 21a oriented laterally, a rear face section 21b disposed rearward of the front face section 21a and oriented laterally, an inner face section 21c oriented along the front-rear axis, and an outer face section 21d disposed laterally outward of the inner face section 21c and oriented along the front-rear axis.

The front and rear face sections 21a and 21b each have a lateral dimension L1, whereas the inner and outer face sections 21c and 21d each have a front-rear dimension L2, the dimension L1 being smaller than the dimension L2. The legs 21 are each in the form of a square pipe with a rectangular cross section.

The ROPS frame 20 includes a pair of left and right coupling sections 23 each bent at an angle and coupled to a lower portion of the corresponding inner face section 21c and a rib 24 in the form of an elongate flat plate coupled to respective lower ends of each front face section 21a and each rear face section 21b along the front-rear axis.

### Attachment Sections 30 Coupled to Support Frame Members 11

As illustrated in Figs. 2 and 3, the tractor includes a pair of left and right attachment sections 30 coupled to respective upper portions of the support frame members 11. As illustrated in Figs. 4, 5, and 6, the attachment sections 30 each include a first portion 31, two second portions 32, a third portion 33, and a fourth portion 34.

The first portion 31 is in the form of a flat plate coupled to an outer face of an upper portion of the corresponding support frame member 11. The first portion 31 faces laterally outward and is oriented along the lateral and vertical axes. The attachment sections 30 each include two nuts 37 welded to a front face of each first portion 31.

The second portions 32 include an inner second portion 32 and an outer second portion 32. The inner second portion 32 is in the form of an upper portion of the corresponding support frame member 11, to which the first portion 31 is coupled. The outer second portion 32 is in the form of a bent flat plate coupled to an outwardly lateral portion and lower portion of the first portion 31 and the corresponding support frame member 11. The outer second portion 32 includes a coupling section 32a at an upper portion. The second portions 32 extend rearward from respective inwardly and outwardly lateral portions of the first portion 31 and are oriented along the front-rear and vertical axes.

The third portion 33 is in the form of a flat plate coupled to respective upper portions of the first portion 31 and the inner second portion 32 (or the corresponding support frame member 11). The third portion 33 extends rearward from an upper portion of the first portion 31 and is oriented along the front-rear and lateral axes. The attachment sections 30 each include a nut 38 welded to a lower face of each third portion 33.

The fourth portion 34 is in the form of a lower portion of the outer second portion 32, and is coupled to a lower portion of the first portion 31, a lower portion of the outer second portion 32, and the inner second portion 32 (or the corresponding support frame member 11). The fourth portion 34 extends rearward from a lower portion of the first portion 31 and is oriented along the front-rear and lateral axes.

The attachment sections 30 are each in the form of a box made up of the first portion 31, the inner second portion 32 (or the corresponding support frame member 11), the outer second portion 32, the third portion 33, and the fourth portion 34. The attachment sections 30 each have an exposed upper portion 35 defined by an upper portion of the first portion 31, an upper portion of the outer second portion 32, and an outer portion of the third portion 33. The exposed upper portion 35 faces in an upward and rearward direction.

The attachment sections 30 each have an exposed portion 36 defined by respective rear portions of the inner second portion 32 (or the corresponding support frame member 11), the outer second portion 32, the third portion 33, and the fourth portion 34. The exposed portion 36 faces rearward.

### Around Attachment Sections 30

As illustrated in Figs. 1, 2, and 3, the tractor includes a pair of left and right support plates 25 each in the form of a flat plate. The support plates 25 are to the left and right of the driver's seat 10 and extend along the front-rear axis. The support plates 25 each have an upper portion coupled to the coupling section 32a of the corresponding attachment section 30 (or the corresponding outer second portion 32). The tractor includes a pair of left and right handles 26 attached to the respective support plates 25 for a worker to hold when, for example, getting into or out of the tractor. The tractor includes a pair of left and right fenders 27 attached to the respective support plates 25 and covering the respective rear wheels 2 from above.

The tractor includes a pair of left and right support plates 29 coupled to the respective attachment sections 30 (or the respective outer second portions 32). The support plates 29 are each in the form of a flat plate bent at an angle and provided with a rubber mount 29a.

The tractor includes a fuel tank 28 disposed below the driver's seat 10 and the support plates 25 (or the fenders 27) and extending laterally. The fuel tank 28 has left and right rear portions attached to the respective rubber mounts 29a.

### How To Attach Legs 21 to Attachment Sections 30

As illustrated in Figs. 3 to 6, a worker may attach the ROPS frame 20 (or the legs 21) to the tractor as follows: The worker holds the ROPS frame 20 by hand or places the ROPS frame 20 onto a cart or the like (not illustrated in the drawings) in an upright position, and moves the ROPS frame 20 to a position rearward of the tractor.

The worker then moves the ROPS frame 20 (or the legs 21) forward to bring the legs 21 close to the respective attachment sections 30. The worker inserts the legs 21 through the respective exposed upper portions 35 and the respective exposed portions 36 into the respective attachment sections 30, so that the legs 21 as inserted in the respective attachment sections 30 extend upward through the respective exposed upper portions 35.

The worker, in this case, either places respective lower portions of the legs 21 onto the respective fourth portions 34 and the coupling sections 23 onto the respective third portions 33 or immediately places the coupling sections 23 onto the respective third portions 33. Placing the coupling sections 23 onto the respective third portions 33 places the ROPS frame 20 (or the legs 21) at a position along the vertical axis and leaves a gap between the lower portion of each leg 21 and the corresponding fourth portion 34.

The worker then brings the front face sections 21a into contact with the respective first portions 31 and the outer face sections 21d into contact with the respective outer second portions 32 to insert the legs 21 through the respective exposed upper portions 35 fully into the respective attachment sections 30.

The worker inserts two bolts 39 along the front-rear axis through the front and rear face sections 21a and 21b of each leg 21 and the first portion 31 of the corresponding attachment section 30 from rearward of the attachment section 30 and the leg 21. The worker then fastens the bolts 39 to the respective nuts 37 on the attachment section 30 (or the first portion 31).

The worker inserts a bolt 40 vertically through the coupling section 23 of each leg 21 and the third portion 33 of the corresponding attachment section 30 from upward of the attachment section 30 and the leg 21. The worker then fastens the bolt 40 to the nut 38 on the attachment section 30 (or the third portion 33). The worker thereby couples the ROPS frame 20 (or the legs 21) to the attachment sections 30 with use of bolts 39 extending along the front-rear axis and the bolt 40 extending along the vertical axis.

### How To Detach Legs 21 from Attachment Sections 30

As illustrated in Figs. 3 to 6, a worker may detach the ROPS frame 20 (or the legs 21) from the tractor as follows: The worker detaches the bolts 39 and 40.

The detachment does not lower the ROPS frame 20 (or the legs 21) due to the contact between the coupling sections 23 and the respective third portions 33 or the contact between the respective lower portions of the legs 21 and the respective fourth portions 34.

The worker holds the ROPS frame 20 by hand and moves the ROPS frame 20 rearward to pull the legs 21 through the respective exposed portions 36 and the respective exposed upper portions 35 out of the respective attachment sections 30. The worker thereby detaches the ROPS frame 20 (or the legs 21) from the tractor.

### Correspondence between Elements

The body frame members 3 and the transaxle 5 correspond to the "body" recited in the claims. The coupling sections 23 and the respective fourth portions 34 of the attachment sections 30 correspond to the "positioner" recited in the claims. The bolts 39 and 40 correspond to the "coupler" recited in the claims.

The work vehicle includes a ROPS frame 20 with a leg 21, an attachment section 30 coupled to the body (or the body frame members 3), an exposed portion 36 in the attachment section 30, the exposed portion 36 facing rearward or forward and allowing the leg 21 to enter and exit the attachment section 30 as a result of being moved forward or rearward, and at least one coupler (or the bolts 39 and 40) configured to couple the leg 21 in the attachment section 30 to the attachment section 30.

The work vehicle may include a positioner (or the coupling sections 23, the fourth portions 34) configured to place the leg 21 in the attachment section 30 at a position along a vertical axis. The work vehicle may be configured such that the at least one coupler member includes a first bolt (or the bolts 39 and 40) configured to be inserted through the leg 21 and the attachment section 30 along a front-rear axis and be fastened.

The work vehicle may be configured such that the leg 21 includes a positioner (or the coupling sections 23) configured to come into contact with the attachment section 30 to place the leg 21 in the attachment section 30 at a position along a vertical axis, and the at least one coupler includes a second bolt 40 configured to be inserted through the positioner (or the coupling sections 23) and the attachment section 30 along the vertical axis and be fastened.

The work vehicle may be configured such that the leg 21 is in a form of a square pipe including a front face section 21a oriented along a lateral axis, a rear face section 21b rearward of the front face section 21a and oriented along the lateral axis, an inner face section 21c oriented along the front-rear axis, and an outer face section 21d laterally outward of the inner face section 21c relative to the body (or the body frame members 3) and oriented along the front-rear axis, the front face section 21a and the rear face section 21b each have a lateral dimension L1, whereas the inner face section 21c and the outer face section 21d each have a front-rear dimension L2, the lateral dimension L1 being smaller than the front-rear dimension L2, and the first bolt 39 is configured to be inserted through the front face section 21a, the rear face section 21b, and the attachment section 30 along the front-rear axis and be fastened.

The work vehicle may be configured such that the attachment section 30 includes: a first portion 31 oriented along a lateral axis and a vertical axis, a second portion 32 extending rearward or forward from a lateral portion of the first portion 31 and oriented along a front-rear axis and the vertical axis, a third portion 33 extending rearward or forward from an upper portion of the first portion 31 and oriented along the front-rear axis and the lateral axis, a fourth portion 34 extending rearward or forward from a lower portion of the first portion 31 and oriented along the front-rear axis and the lateral axis, and an exposed upper portion 35 in the third portion 33, the exposed portion 36 is defined by respective ends of the second portion 32, the third portion 33, and the fourth portion 34 along the front-rear axis, and the leg 21 in the attachment section 30 extends upward through the exposed upper portion 35.

### Alternative Embodiments

The present invention is not limited to the above embodiment as an example. The description below deals with embodiments of the present invention as other typical examples. Elements having the same configuration as in the above embodiment are designated by the same reference numerals as in the above embodiment.
(1) The support frame members 11 may each be coupled to a portion of the corresponding body frame member 3 which portion is below the steering wheel 9 and extend upward from the body frame member 3. In the above case, the attachment sections 30, if disposed at respective upper portions of the support frame members 11, should desirably be each configured such that the second portions 32 extend forward from respective inwardly and outwardly lateral portions of the first portion 31, that the third portion 33 extends forward from an upper portion of the first portion 31, and that the fourth portion 34 extends rearward from a lower portion of the first portion 31. In the above case, the exposed upper portions 35 face in an upward and forward direction, whereas the exposed portions 36 face forward. With the above configuration, a worker places the ROPS frame 20 forward of the tractor in an upright position, moves the ROPS frame 20 rearward to bring the ROPS frame 20 close to the attachment sections 30, and inserts the legs 21 through the respective exposed upper portions 35 and the respective exposed portions 36 into the respective attachment sections 30. The worker inserts two bolts 39 along the front-rear axis through the front and rear face sections 21a and 21b of each leg 21 and the first portion 31 of the corresponding attachment section 30 from forward of the attachment section 30 and the leg 21. The worker then fastens the bolts 39 to the respective nuts 37 on the attachment section 30 (or the first portion 31). The worker inserts a bolt 40 vertically through the coupling section 23 of each leg 21 and the third portion 33 of the corresponding attachment section 30 from upward of the attachment section 30 and the leg 21. The worker then fastens the bolt 40 to the nut 38 on the attachment section 30 (or the third portion 33).
(2) The attachment sections 30 may each be configured such that the bolts 39 are each inserted through the inner face section 21c, the outer face section 21d, and the outer second portion 32 along the lateral axis and fastened for the corresponding leg 21 to be coupled to the attachment section 30. The bolts 39 and 40 each as a coupler may be replaced with coupling pins (not illustrated in the drawings) configured to be inserted through and pulled out of the legs 21 and the attachment sections 30.
(3) The attachment sections 30 may each be configured such that the inner second portion 32, that is, an upper portion of the corresponding support frame member 11, is so bent outward as to be parallel to the outer second portion 32. In the above case, the inner second portion 32 (or the corresponding support frame member 11) may be separated from the outer second portion 32 by a distance equal to the lateral dimension L1 of each of the front and rear face sections 21a and 21b of the corresponding leg 21. With this configuration, the leg 21 in the attachment section 30 has its inner face section 21c in contact with the inner second portion 32 (or the corresponding support frame member 11) and its outer face section 21d in contact with the outer second portion 32. In the above case, the attachment sections 30 may each be configured such that the bolts 39 are each inserted through the inner face section 21c, the outer face section 21d, the inner second portion 32 (or the corresponding support frame member 11), and the outer second portion 32 along the lateral axis and fastened.
(4) The ROPS frame 20 may be configured such that each leg 21 in the corresponding attachment section 30 has its coupling section 23 on the third portion 33 and a lower portion in contact with the fourth portion 34 to place the ROPS frame 20 (or the legs 21) at a position along the vertical axis.
(5) The ROPS frame 20 may be configured such that the legs 21 are each oriented vertically instead of inclined as illustrated in Figs. 3 and 4 and that the outer second portion 32 of each attachment section 30 is upright in parallel to the corresponding support frame member 11. In the above case, the inner second portion 32 (or the corresponding support frame member 11) may be separated from the outer second portion 32 by a distance equal to the lateral dimension L1 of each of the front and rear face sections 21a and 21b of the corresponding leg 21, with the third portion 33 excluded for a space directly above the inside of the attachment section 30 to serve as the exposed upper portion 35. In the above case, the leg 21 has a lower portion in contact with the fourth portion 34 to place the ROPS frame 20 (or the legs 21) at a position along the vertical axis.
(6) The ROPS frame 20 may be configured such that the upper section 22 is rectangular in a front (or rear) view and include a single, upright leg 21 coupled to a laterally central portion of a lower side of the upper section 22 and a single, upright attachment section 30 coupled to one of the body frame members 3 or the transaxle 5 (see item (5) above).
(7) The attachment sections 30 may each be configured not to use an upper portion of the corresponding support frame member 11 as its inner second portion 32 such that the attachment section 30 is made up of a first portion 31, a single, outer second portion 32, a third portion 33, and a fourth portion 34.
(8) The attachment sections 30 may each be configured such that the exposed upper portion 35 is a little larger than illustrated in Figs. 4 to 6. With this configuration, a worker performs the operation below instead of moving the ROPS frame 20 (or the legs 21) forward or rearward to insert the legs 21 through the respective exposed portions 36 into the respective attachment sections 30 or pull the legs 21 out of the respective attachment sections 30 through the respective exposed portions 36. The worker lowers the ROPS frame 20 from above the tractor in an upright position to insert respective lower portions of the legs 21 through the respective exposed upper portions 35 for the legs 21 to be inserted into the respective attachment sections 30. The worker lifts the ROPS frame 20 to pull the legs 21 upward out of the respective attachment sections 30 through the respective exposed upper portions 35. The above configuration allows the ROPS frame 20 to be attached or detached as a result of being moved (i) forward or rearward or (ii) downward or upward.
(9) The embodiment described above is a tractor as an example work vehicle. The work vehicle may alternatively be, for example, an agricultural work vehicle such as a combine or a construction work vehicle such as a backhoe or a wheel loader.

The configurations disclosed in the above embodiments (including the other embodiments, the same applies hereinafter) may be implemented by being combined with configurations disclosed in other embodiments as long as no contradiction arises. The embodiments disclosed in the present specification are examples, and embodiments of the present disclosure are not limited to the above embodiments. The disclosed embodiments can be modified as appropriate within a scope not departing from the object of the present disclosure.

The present invention is applicable to work vehicles.

## Claims

1. A work vehicle, comprising:
a body (3, 5);
an attachment section (30) coupled to the body (3, 5);
a roll-over protective structure frame (20) with a leg (21);
an exposed portion (36) in the attachment section (30), the exposed portion (36) facing rearward or forward and allowing the leg (21) to enter and exit the attachment section (30) as a result of being moved forward or rearward; and
at least one coupler (39, 40) configured to couple the leg (21) in the attachment section (30) to the attachment section (30).

2. The work vehicle according to claim 1, further comprising:
a positioner (23, 34) configured to place the leg (21) in the attachment section (30) at a position along a vertical axis.

3. The work vehicle according to claim 1 or 2, wherein
the at least one coupler (39, 40) includes a first bolt (39) configured to be inserted through the leg (21) and the attachment section (30) along a front-rear axis and be fastened.

4. The work vehicle according to claim 3, further comprising:
a positioner (23, 34) provided for the leg (21) and configured to come into contact with the attachment section (30) to place the leg (21) in the attachment section (30) at a position along a vertical axis,
wherein the at least one coupler (39, 40) includes a second bolt (40) configured to be inserted through the positioner (23, 34) and the attachment section (30) along the vertical axis and be fastened.

5. The work vehicle according to claim 3 or 4, wherein
the leg (21) is in a form of a square pipe including:
a front face section (21a) oriented along a lateral axis;
a rear face section (21b) rearward of the front face section (21a) and oriented along the lateral axis;
an inner face (21c) section oriented along the front-rear axis; and
an outer face (21d) section laterally outward of the inner face (21c) section relative to the body (3, 5) and oriented along the front-rear axis,
the front face section (21a) and the rear face section (21b) each have a lateral dimension (L1), whereas the inner face (21c) section and the outer face (21d) section each have a front-rear dimension (L2), the lateral dimension (L1) being smaller than the front-rear dimension (L2), and
the first bolt (39) is configured to be inserted through the front face section (21a), the rear face section (21b), and the attachment section (30) along the front-rear axis and be fastened.

6. The work vehicle according to any one of claims 1 to 5, wherein
the attachment section (30) includes:
a first portion (31) oriented along a lateral axis and a vertical axis;
a second portion (32) extending rearward or forward from a lateral portion of the first portion (31) and oriented along a front-rear axis and the vertical axis;
a third portion (33) extending rearward or forward from an upper portion of the first portion (31) and oriented along the front-rear axis and the lateral axis;
a fourth portion (34) extending rearward or forward from a lower portion of the first portion (31) and oriented along the front-rear axis and the lateral axis; and
an exposed upper portion in the third portion (33),
the exposed portion (36) is defined by respective ends of the second portion (32), the third portion (33), and the fourth portion (34) along the front-rear axis, and
the leg (21) in the attachment section (30) extends upward through the exposed upper portion.
